# EUROPÄISCHE PATENTSCHRIFT

(11) **EP 4 202 272 B1**
(45) Veröffentlichungstag und Bekanntmachung des Hinweises auf die Patenterteilung: **23.10.2024**
(21) Anmeldenummer: 21217231.6
(22) Anmeldetag: 23.12.2021
(51) Int. Cl.: F16K 31/06

(54) **FLUIDVENTIL**
FLUID VALVE
SOUPAPE À FLUIDE

(43) Veröffentlichungstag der Anmeldung: 28.06.2023
(73) Patentinhaber: AVS, Ingenieur J.C. Römer GmbH, 94481 Grafenau (DE)
(72) Erfinder: Fisch, Rainer, 94051 Hauzenberg (DE)
(74) Vertreter: Wolf, Gerhard

(56) Entgegenhaltungen:
- WO-A1-2007/124826
- DE-A1- 102013 220 557
- DE-A1- 102014 005 498
- DE-A1- 2 426 748
- US-A1- 2008 149 192

## Beschreibung

Die Erfindung betrifft ein Fluidventil mit einer magnetischen Antriebseinheit, mittels der ein Ventilschließköper bewegbar ist.

Fluidventile mit einem magnetischen Antrieb sind bereits bekannt. Insbesondere sind Fluidventile bekannt, bei denen ein Anker durch das Applizieren eines Magnetfeldes linear bewegt, d.h. verschoben, wird. Diese Linearbewegung wird in eine Schwenkbewegung eines Ventilschließkörpers umgesetzt. Abhängig von der Schwenkbewegung des Ventilschließkörpers wird ein Freigeben bzw. Verschließen eines Fluidkanals im Fluidventil bewirkt.

Die Druckschrift DE 10 2014 005 498 A1 offenbart ein Fluidventil mit einem schwenkbeweglich gelagerten Anker.

Die Druckschrift DE 10 2013 220 557 A1 zeigt eine magnetisch betätigte Ventilanordnung.

Die Druckschrift US 2008/0149192 A1 offenbart ein Ventil.

Die Druckschrift DE 24 26 748 A1 lehrt ein Magnetventil für aggressive Medien.

Die Druckschrift WO 2007/124826 A1 offenbart ein Ventil mit einem elektromagnetischen Antrieb.

Ein wesentlicher Nachteil bekannter Fluidventile besteht darin, dass die durch das magnetische Feld einer Spule bewirkte Krafteinleitung in den Anker konstruktionsbedingt gering ist, so dass relativ große Ströme durch die Spule nötig sind, um das Fluidventil umschalten zu können.

Ausgehend hiervon ist es Aufgabe der Erfindung, ein Fluidventil anzugeben, das ein verbessertes Schaltverhalten bei geringeren Schaltströmen ermöglicht.

Die Aufgabe wird durch ein Fluidventil mit den Merkmalen des unabhängigen Patentanspruchs 1 gelöst. Bevorzugte Ausführungsformen sind Gegenstand der Unteransprüche.

Gemäß einem Aspekt wird ein Fluidventil umfassend eine magnetische Antriebseinheit für einen Ventilschließkörper offenbart. Die Antriebseinheit umfasst einen Kern, eine abschnittsweise den Kern umgebende Spule und einen durch die Bestromung der Spule und die daraus resultierende Magnetkraft bewegbaren Anker. An dem Anker ist ein Lagerabschnitt vorgesehen, der eine Lagerstelle aufweist, mittels der der Anker an einem Grundkörper der Antriebseinheit verschwenkbar gelagert ist. Die Verschwenkbarkeit ist dabei vorzugsweise derart realisiert, dass der Anker bei Bestromung der Spule zu dem Kern hin geschwenkt und im unbestromten Zustand von dem Kern weg in eine Ruhelage geschwenkt wird. Vorzugsweise ist der Anker federbelastet, so dass die Ruhelage durch die Wirkung der Federkraft eingenommen wird und im bestromten Zustand der Anker entgegen der Federkraft zu dem Kern hin geschwenkt wird.

Der technische Vorteil des Fluidventils besteht darin, dass durch die verschwenkbare Lagerung des Ankers ein verbessertes Schaltverhalten des Fluidventils erreicht wird, da im Vergleich zur linearen Verschiebung des Ankers geringere Schaltströme nötig sind.

Gemäß einem Ausführungsbeispiel ist die Lagerstelle eine Gleitlagerstelle, die außenseitig freiendseitig am Anker vorgesehen ist und die mit einer Gleitlagergegenfläche des Grundkörpers zusammenwirkt. Dadurch wird ein sehr einfacher Aufbau der Antriebseinheit erreicht, da die Lagerung durch bloßes Einsetzen in eine Ankeraufnahme des Grundkörpers erreicht wird.

Gemäß einem Ausführungsbeispiel weist die Lagerstelle eine im Querschnitt kreisbogenförmig ausgebildete Gleitfläche auf. Diese wirkt mit einer invers geformten Gleitlagergegenfläche zusammen, die an der Ankeraufnahme des Grundkörpers vorgesehen ist. Dadurch wird zwischen dem Grundkörper und dem Anker ein Gleitlager geschaffen, das eine Verschwenkbarkeit des Ankers bei gleichzeitig kostengünstiger Herstellung des Fluidventils ermöglicht.

Gemäß einem Ausführungsbeispiel ist der Kern U-förmig ausgebildet und weist ein Paar von Polflächen auf. Der Anker ist derart ausgebildet, dass dieser das Paar von Polflächen überspannt. Vorzugsweise wird durch das Verschwenken des Ankers im bestromten Zustand der Spule der magnetische Kreis geschlossen. Durch das Erstrecken des Ankers über die Polflächen wird eine hohe Kraft auf den Anker appliziert, die zur Bewegung, insbesondere Verschwenkung, des Ventilschließkörpers genutzt wird.

Gemäß einem Ausführungsbeispiel ist der Anker um eine Schwenkachse verschwenkbar, die parallel zu einer Ebene verläuft, in der die Polflächen des Kerns angeordnet sind. Die Schwenkachse liegt vorzugsweise unterhalb des Paars von Polflächen, die in Richtung der Längsachse des Ankers gesehen übereinander angeordnet sind. Dadurch lässt sich der Anker relativ zu der Ebene der Polflächen verschwenken und dabei der magnetische Kreis bei Bestromung der Spule schließen.

Gemäß einem Ausführungsbeispiel ist der Anker relativ zu der Ebene, in der die Polflächen des Kerns angeordnet sind, verschwenkbar, und zwar derart, dass der Anker im bestromten Zustand in eine erste Schwenkstellung zu den Polflächen hin geschwenkt und im stromlosen Zustand in eine zweite Schwenkstellung positioniert wird, in der die Längsachse des Ankers von der Ebene der Polflächen schräg absteht. Das Herausschwenken aus der Ebene erfolgt vorzugsweise mittels der Federkraft einer Feder, die im bestromten Zustand der Spule verformt wird. In der ersten Schwenkstellung ist der Anker vorzugsweise mit geringem Abstand, beispielsweise kleiner als 1mm, insbesondere kleiner als 0,5mm von den Polflächen entfernt, d.h. es erfolgt keine direkte Anlage an die Polflächen. In der ersten Schwenkstellung ist der magnetische Kreis geschlossen. In der zweiten Schwenkstellung beträgt der Abstand des Ankers von den Polflächen (insbesondere zu der am weitesten entfernten Polfläche) maximal 5mm, insbesondere 4mm, 3mm oder 2mm, besonders bevorzugt 1mm oder weniger, beispielsweise 0,8mm oder im Wesentlichen 0,8mm. Aufgrund des geringen Hubs der Schwenkbewegung wird eine hohe Krafteinleitung in den Anker und damit eine hohe Stellkraft erzeugt.

Gemäß einem Ausführungsbeispiel weist der Lagerabschnitt an einander gegenüberliegenden Endbereichen jeweils zumindest eine schlitzartige Ausnehmung auf, in die ein Abschnitt einer Feder einsetzbar ist, mittels der die Rückstellung des Ankers im stromlosen Zustand erfolgt. Die Feder kann beispielsweise durch eine Flachfeder gebildet sein, die an dem vom Lagerabschnitt beabstandeten freien Ende gegenüber der Ankeraufnahme des Grundkörpers anliegt. Dadurch kann auf technisch einfache Weise die Federbelastung des Ankers erreicht werden.

Gemäß einem Ausführungsbeispiel verlaufen die schlitzartigen Ausnehmungen schräg zu einer Längsachse des Ankers. Durch diese Schrägstellung wird erreicht, dass die Federn beim Verschwenken des Ankers zu den Polflächen hin entgegen deren Federkraft verformt werden und dadurch die zur Rückstellung des Ankers nötige Federkraft entsteht.

Erfindungsgemäß weist der Anker an der dem Lagerabschnitt gegenüberliegenden Seite eine Anlenkstelle für den Ventilschließkörper auf. Die Anlenkstelle ist dabei derart ausgebildet, dass der Ventilschließkörper in Wirkverbindung mit dem Anker steht und damit ein Verschwenken des Ankers zu einem Verschwenken des Ventilschließkörpers führt, der Ventilschließkörper aber auch selbst relativ zum Anker verschwenkbar ist. Die Anlenkstelle kann beispielsweise im Querschnitt hakenförmig ausgebildet sein und mit einem freien Ende des Ventilschließkörpers eine Drehgelenkstelle ausbilden.

Erfindungsgemäß ist die Anlenkstelle an einem Vorsprung des Ankers ausgebildet, der an einer Rückseite des Ankers vorgesehen ist, wobei die Rückseite einer Vorderseite des Ankers gegenüberliegt, die den Polflächen des Kerns zugewandt ist. Dadurch steht die Anlenkstelle in Richtung eines Ventilgehäuses von dem Anker ab, in den zumindest ein Abschnitt des Ventilschließkörpers hineinragt. Somit lässt sich eine raumsparende Kopplung des Ankers mit dem Ventilschließkörper erreichen.

Erfindungsgemäß bildet die Anlenkstelle eine Aufnahme für ein freies Ende des Ventilschließkörpers, wobei das freie Ende des Ventilschließkörpers verschwenkbar in der Anlenkstelle gehalten ist.

Dadurch kann eine Kraftübertragung vom Anker auf den Ventilschließkörper bei gleichzeitiger Verschwenkbarkeit des Ankers relativ zum Ventilschließkörper erreicht werden.

Gemäß einem Ausführungsbeispiel weist der Anker mehrere übereinander geschichtete Ankerbleche auf, die abschnittsweise durch einen Ankerträger umgeben und relativ zueinander fixiert sind. Dadurch kann der Anker kostengünstig hergestellt werden, da dieser mehrere Stanzteile, insbesondere durch Stanzen hergestellte Metallbleche, anstelle eines einstückigen Metallteils aufweist.

Gemäß einem Ausführungsbeispiel ist an dem Ankerträger die Anlenkstelle für den Ventilschließkörper und der Lagerabschnitt ausgebildet. Damit kann eine kostengünstige Herstellung des Ankers erreicht werden, da der Ankerträger, der die Ankerbleche relativ zueinander fixiert, gleichzeitig zur Lagerung des Ankers in der Ankeraufnahme sowie der Kopplung des Ankers mit dem Ventilschließkörper dient.

Alternativ kann der Anker einen einstückig ausgebildeten metallischen Ankerkern anstelle der Ankerbleche aufweisen. Dieser Ankerkern kann ebenfalls durch einen Ankerträger umgeben sein, an dem die Anlenkstelle für den Ventilschließkörper und der Lagerabschnitt vorgesehen ist.

Gemäß einem Ausführungsbeispiel ist der Ankerträger als Spritzgussteil ausgebildet. Dadurch kann die Fixierung der Ankerbleche bzw. die Ausbildung des Lagerabschnitts und der Anlenkstelle durch einen Spritzgießvorgang erfolgen, so dass die Herstellkosten des Ankers verringert werden.

Gemäß einem Ausführungsbeispiel ist die Verschwenkbarkeit des Ankers sowohl im bestromten als auch im unbestromten Zustand der magnetischen Antriebseinheit durch den Schwenkbereich des Ventilschließkörpers in dem Ventilgehäuse begrenzt. In anderen Worten wird die Schwenkbewegung des Ankers nicht dadurch begrenzt, dass dieser gegenüber umgebenden Bauteilen des Fluidventils anschlägt, sondern der Anker wird indirekt über den Ventilschließkörper in seiner Verschwenkbarkeit begrenzt. Dadurch ist es nicht nötig, eine Justierung des Verschwenkweges des Ankers vorzunehmen, wodurch die Herstellungskosten des Fluidventils verringert werden.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft einen Längsschnitt durch ein Fluidventil;
- Fig. 2: beispielhaft einen Anker in einer ersten perspektivischen Darstellung;
- Fig. 3: beispielhaft einen Anker in einer zweiten perspektivischen Darstellung; und
- Fig. 4: beispielhaft einen Anker in einer Seitendarstellung.

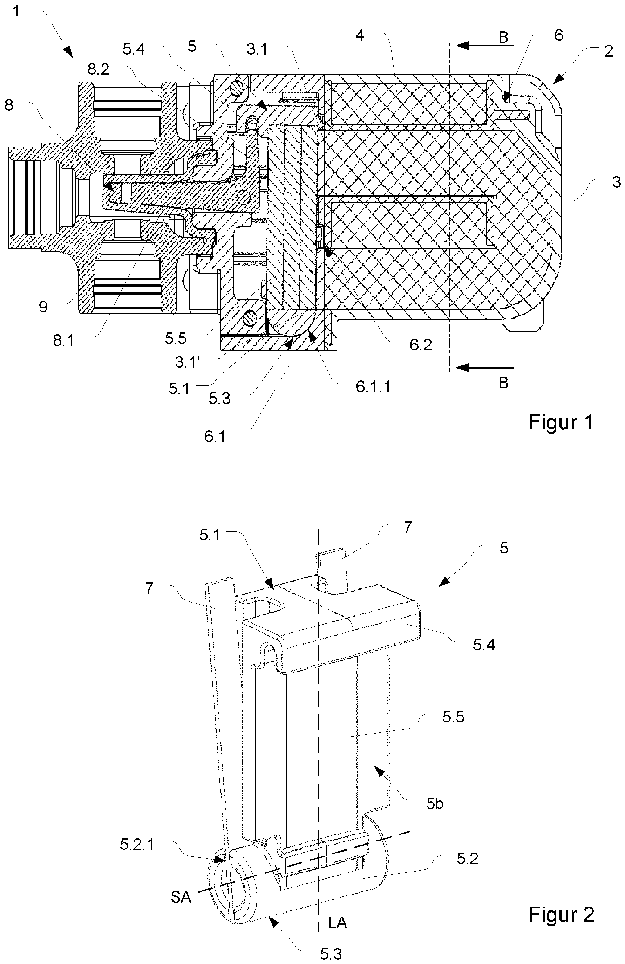

Figur 1 zeigt beispielhaft und schematisch eine Längsschnittdarstellung mittig durch das Fluidventil 1.

Das Fluidventil 1 umfasst eine Antriebseinheit 2 für einen Ventilschließkörper 8 und ein Ventilgehäuse 9, in dem zumindest ein Fluidkanal vorgesehen ist. Der Ventilschließkörper 8 reicht in das Ventilgehäuse 9 hinein und ist mit der Antriebseinheit 2 derart gekoppelt, dass der Ventilschließkörper 8 durch die Antriebseinheit 2 bewegbar, insbesondere verschwenkbar ist. Insbesondere kann der Ventilschließkörper 8 eine erste und eine zweite Schwenkstellung einnehmen, um abhängig von der Schwenkstellung eine Ventilöffnung freizugeben bzw. zu schließen. Im gezeigten Ausführungsbeispiel weist das Ventilgehäuse 9 drei Anschlüsse auf, wobei abhängig von der Schwenkstellung des Ventilschließkörpers 8 jeweils ein Paar von Anschlüssen miteinander fluidisch verbunden ist. Abweichend davon kann das Fluidventil 1 aber auch lediglich zwei Anschlüsse aufweisen, wobei abhängig von der Schwenkstellung des Ventilschließkörpers 8 eine fluidische Verbindung zwischen den Anschlüssen freigegeben wird oder nicht.

Das Fluidventil 1 weist die folgende Funktionalität auf: die Antriebseinheit 2 ist dazu ausgebildet, die Schwenkstellung eines Ankers 5 zu beeinflussen. Die Antriebseinheit 2 ist eine elektromagnetische Antriebseinheit, d.h. bei Bestromung einer Spule 4 der Antriebseinheit 2 wird eine Magnetkraft erzeugt, mittels der der Anker 5 aus einer zweiten Schwenkstellung in eine erste Schwenkstellung bewegt wird. Diese erste Schwenkstellung ist in Fig. 1 gezeigt. Diese erste Schwenkstellung wird solange gehalten, solange die Spule 4 bestromt ist. Der Anker 5 ist vorzugsweise mittels einer Feder 7 derart federbelastet, dass dieser nach dem Beenden des Stromflusses durch die Spule 4 in die zweite Schwenkstellung zurückbewegt wird.

Wie in Fig. 1 gezeigt, ist der Ventilschließkörper 8 mit dem Anker 5 derart gekoppelt, dass der Ventilschließkörper 8 durch den Anker 5 bewegt, insbesondere verschwenkt wird. Insbesondere nimmt der Ventilschließkörper 8 im Ventilgehäuse 9 abhängig von der Schwenkstellung des Ankers 5 eine erste oder zweite Stellung ein und definiert damit die Ventilstellung bzw. das Freigeben bzw. Verschließen eines Fluidkanals.

Nachfolgend wird der Aufbau des Ankers 5 und dessen Zusammenwirken mit den anderen Funktionselementen der Antriebseinheit 2 des Fluidventils 1 näher beschrieben.

Die Antriebseinheit 2 umfasst einen Grundkörper 6. Der Grundkörper 6 bildet die tragende Grundstruktur der Antriebseinheit 2. Er ist vorzugsweise als Spitzgussteil, insbesondere als Kunststoffspritzgussteil, ausgebildet. Der Grundkörper 6 weist eine rohrförmig oder im Wesentlichen rohrförmig ausgebildete Aufnahme für die Spule 4 auf. Innerhalb der Aufnahme ist eine erste Einschuböffnung ausgebildet, in die ein Schenkel eines U-förmig ausgebildeten Kerns 3 einschiebbar ist.

Der Grundkörper 6 umfasst des Weiteren eine Ankeraufnahme 6.1. Diese Ankeraufnahme 6.1 schließt an die Aufnahme der Spule 1 unmittelbar an und ist dazu ausgebildet, den Anker 5 verschwenkbar zu lagern. Die Ankeraufnahme 6.1 ist schalenartig, insbesondere rechteckschalenartig ausgebildet und weist einen Bodenbereich und mehrere Wandungsbereiche auf. Die Wandungsbereiche sind mit dem Bodenbereich verbunden, umgeben den Bodenbereich umfangsseitig und stehen von dem Bodenbereich ab, und zwar zu einer Seite, die der Spule 4 abgewandt ist.

In dem Bodenbereich ist eine zweite Einschuböffnung vorgesehen, in die ein zweiter Schenkel eines U-förmig ausgebildeten Kerns 3 einschiebbar ist. Der U-förmige Kern 3 ist damit jochartig ausgebildet, wobei ein Schenkel des Kerns durch die Spule 4 umgeben ist, so dass bei Bestromung der Spule 4 ein geschlossener magnetischer Kreis durch den Kern 3 und den die Polflächen 3.1, 3.1' des Kerns 3 überspannenden Anker 5 gebildet wird.

Der Kern 3 kann beispielsweise aus mehreren geschichteten Flachmaterialstücken gebildet sein. Die Flachmaterialstücke sind insbesondere Stanzteile, die aus einem metallischen Flachmaterial, insbesondere einem Metallblech hergestellt sind. Zur Bildung des Kerns 3 werden diese mit deren Flachseiten deckungsgleich übereinandergelegt, so dass ein Stapel mit mehreren Flachmaterialstücken entsteht, der in dieser Anordnung den Kern 3 bildet (sog. geschichteter Kern). Dabei liegen die einzelnen Flachmaterialstücke unmittelbar und elektrisch leitend gegeneinander an, so dass der geschichtete Kern die gleichen oder im Wesentlichen gleichen elektrischen Eigenschaften aufweist, wie ein einstückig gebildeter Kern. Dadurch können die Kosten zur Herstellung des Kerns 3 wesentlich gesenkt werden.

Fig. 2 bis 4 jeweils zeigen den Anker 5 in Alleinstellung. Am Anker 5 ist ein Lagerabschnitt 5.2 vorgesehen. Der Lagerabschnitt 5.2 weist eine Lagerstelle 5.3 auf, mittels der der Anker 5 an einem Grundkörper 6 der Antriebseinheit 2 verschwenkbar gelagert ist. Aufgrund der verschwenkbaren Lagerung des Ankers 5 kann der Anker 5 die vorbeschriebenen Schwenkstellungen einnehmen, und zwar insbesondere eine zweite Schwenkstellung, in der der Anker 5 aus einer parallel zu den Polflächen 3.1, 3.1' verlaufenden Ebene herausgeschwenkt ist und eine erste Schwenkstellung, in der eine Längsachse des Ankers 5 parallel zu einer Ebene, in der die Polflächen 3.1, 3.1' des Kerns 3 liegen, verläuft.

Der Lagerabschnitt 5.2 ist an einem ersten freien Ende des Ankers 5 vorgesehen. Die an dem Lagerabschnitt 5.2 vorgesehene Lagerstelle 5.3 bildet vorzugsweise eine Gleitlagerstelle, die außenseitig an dem Lagerabschnitt 5.2 gebildet ist. Die Lagerstelle 5.3 wirkt mit einer Gleitlagergegenfläche 6.1.1 zusammen, die am Grundkörper 6 vorgesehen ist. Der Lagerabschnitt 5.2 ist dabei derart in die Ankeraufnahme 6.1 des Grundkörpers 6 eingefügt, dass ein Flächenlager zwischen dem Lagerabschnitt 5.2 und der Ankeraufnahme 6.1 entsteht, d.h. die Lagerstelle 5.3 liegt an der Gleitlagergegenfläche 6.1.1 an, wodurch die verschwenkbare Lagerung des Ankers 5 erreicht wird.

Die Lagerstelle 5.3 des Lagerabschnitts 5.2 ist außenumfangsseitig im Querschnitt kreisbogenförmig ausgebildet, d.h. bildet eine gewölbte Gleitfläche. Die Lagerstelle 5.3 liegt formschlüssig an der konkaven, invers zur Lagerstelle 5.3 geformten Gleitlagergegenfläche 6.1.1 der Ankeraufnahme 6.1 an. Dadurch kann der Anker 5 um eine Schwenkachse SA verschwenkt werden, die parallel zu einer Ebene verläuft, in der die Polflächen 3.1, 3.1' des Kerns 3 angeordnet sind, bzw. die (Schwenkachse SA) senkrecht zur Längsachse LA des Ankers 5 verläuft. Damit kann der Anker 5 zu der in Fig. 1 gezeigten oberen Polfläche 3.1 hin bzw. von dieser weg geschwenkt werden.

An der dem Lagerabschnitt 5.2 gegenüberliegenden Seite des Ankers 5 ist eine Anlenkstelle 5.4 vorgesehen. Über diese Anlenkstelle 5.4 wird der Anker 5 mit dem Ventilschließkörper 8 gekoppelt. Die Anlenkstelle 5.4 weist beispielsweise eine Ausnehmung auf, in der ein Abschnitt, insbesondere ein freiendseitiger Abschnitt des Ventilschließkörpers 8 eingreift. Auch eine inverse Ausbildung ist grundsätzlich denkbar, d.h. dass der Ventilschließkörper 8 eine Ausnehmung aufweist, in die ein Vorsprung der Anlenkstelle 5.4 eingreift. Die Kopplung zwischen dem Anker 5 und dem Ventilschließkörper 8 über die Anlenkstelle 5.4 ist insbesondere derart ausgebildet, dass die Anlenkstelle 5.4 eine Verschwenkbarkeit des Ventilschließkörpers 8 relativ zum Anker 5 ermöglicht. Im gezeigten Ausführungsbeispiel wird dies über eine drehgelenkartige Kopplung zwischen dem Anker 5 und dem Ventilschließkörper 8 erreicht.

Die Anlenkstelle 5.4 ist beispielsweise an einem hakenförmig ausgebildeten Vorsprung des Ankers 5 vorgesehen, der von einer Rückseite 5b des Ankers 5 absteht. Die Rückseite 5b liegt der Vorderseite 5a des Ankers 5 gegenüber, die den Polflächen 3.1, 3.1' des Kerns 3 zugewandt ist. Dadurch kann eine raumsparende Kopplung des Ankers 5 mit dem Ventilschließkörper 8 erreicht werden.

Der Ventilschließkörper 8 ist vorzugsweise winklig ausgebildet und weist einen ersten und zweiten Schenkel 8.1, 8.2 auf. Die Längsachsen der Schenkel 8.1, 8.2 schließen beispielsweise einen Winkel zwischen 80° und 100° miteinander ein. Insbesondere beträgt der Winkel zwischen den Längsachsen der Schenkel 8.1, 8.2 90° oder im Wesentlichen 90°. Der erste Schenkel 8.1 reicht dabei in das Ventilgehäuse hinein und der zweite Schenkel 8.2 verläuft im Wesentlichen parallel zu der Längsachse LA des Ankers 5. Das freie Ende des zweiten Schenkels 8.2 ist über die Anlenkstelle 5.4 mit dem Anker 5 gekoppelt, um die mechanische Verbindung zwischen dem Anker 5 und dem Ventilschließkörper 8 herzustellen. Vorzugsweise ist der Ventilschließkörper 8 mittels des zweiten Schenkels 8.2 direkt, d.h. ohne weitere Zwischenelemente, mit dem Anker 5 gekoppelt.

Der Anker 5 weist insbesondere einen Ankerträger 5.1 auf. Dieser Ankerträger 5.1 nimmt einen metallischen Teil des Ankers 5, der zur magnetischen Kopplung zwischen den Polflächen fungiert, in sich auf. Insbesondere bilden Abschnitte des Ankerträgers 5.1 den Lagerabschnitt 5.2 und die Anlenkstelle 5.4 aus.

Der Anker 5 weist beispielsweise, wie in Fig. 1 gezeigt, mehrere geschichtet angeordnete Flachmaterialstücke auf, die nachfolgend als Ankerbleche 5.5 bezeichnet werden. Die Ankerbleche 5.5 sind insbesondere Stanzteile, die aus einem metallischen Flachmaterial, insbesondere einem Metallblech hergestellt sind. Zur Bildung des Ankers 5 werden diese mit deren Flachseiten deckungsgleich übereinandergelegt, so dass ein Stapel mit mehreren Ankerblechen 5.5 entsteht (sog. geschichteter Anker). Dabei liegen die einzelnen Ankerbleche 5.5 unmittelbar und elektrisch leitend gegeneinander an, so dass der geschichtete Anker 5 die gleichen oder im Wesentlichen gleichen elektrischen Eigenschaften aufweist, wie ein einstückig gebildeter Ankerkern. Dadurch können die Kosten zur Herstellung des Ankers 5 wesentlich gesenkt werden.

Die Ankerbleche 5.5 werden durch den Ankerträger 5.1 abschnittsweise umschlossen und dadurch relativ zueinander fixiert. In anderen Worten dient damit der Ankerträger 5.1 als Aufnahme für die Ankerbleche 5.5. Der Ankerträger 5.1 ist vorzugsweise als Kunststoffspritzgussteil ausgebildet. Die Ankerbleche 5.5 werden beispielsweise in ein Spritzgusswerkzeug eingelegt und anschließend in einem Spritzgussverfahren abschnittsweise mit Kunststoff umspritzt. Dadurch kann eine kostengünstige Herstellung des Ankers 5 erreicht werden.

Wie in den Figuren 2 bis 4 ersichtlich, weist der Ankerträger 5.1 an der den Polflächen 3.1, 3.1' des Kerns 3 zugewandten Vorderseite des Ankers 5 zumindest einen Halteabschnitt 5.1.1 für die Ankerbleche 5.5 auf. Dieser Halteabschnitt 5.1.1 erstreckt sich quer zur Längsachse LA des Ankers 5 entlang der Ankerbleche 5.5 und fixiert diese dabei. Der Halteabschnitt 5.1.1 ist vorzugsweise leistenartig ausgebildet und ist in einem mittleren Bereich des Ankers 5 vorgesehen, so dass der Halteabschnitt 5.1.1 zwischen den Polflächen 5.1, 5.1' zu liegen kommt. Vorzugsweise ist im Grundkörper 6 der Antriebseinheit 2 eine mit dem zumindest einen Halteabschnitt 5.1.1 zusammenwirkende Ausnehmung vorgesehen, in die der Halteabschnitt 5.1.1 bei der Bestromung der magnetischen Antriebseinheit 2 eintauchen kann.

In dem Lagerabschnitt 5.2 sind beispielsweise schlitzartig ausgebildete Ausnehmungen 5.2.1 vorgesehen. Insbesondere sind an den zwei einander gegenüberliegenden Seiten des Lagerabschnitts 5.2 (entlang der Schwenkachse SA gesehen) jeweils eine Ausnehmung 5.2.1 vorgesehen. Diese Ausnehmungen 5.2.1 sind dazu ausgebildet, jeweils ein freies Ende einer Feder 7 aufzunehmen, die zur Rückstellung des Ankers 5 in die erste Schwenkstellung dient, die der Anker 5 im unbestromten Zustand einnimmt.

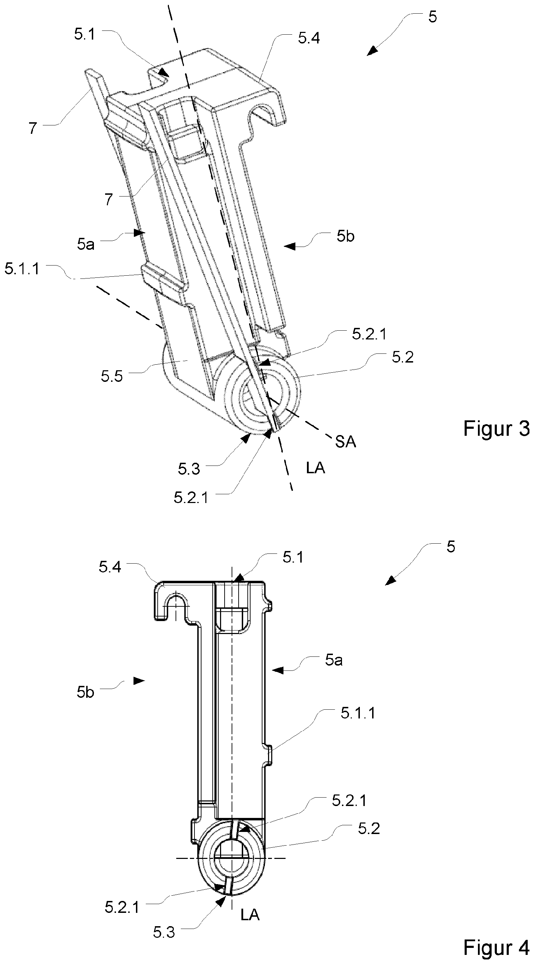

Wie in den Fig. 2 und 3 ersichtlich, ist die Feder 7 als Flachfeder ausgebildet. Sie ist mit einem freien Ende in der Ausnehmung 5.2.1 fixiert und steht von dem Lagerabschnitt 5.2 nach oben hin ab. Insbesondere weist die Feder 7 eine Länge gleich oder im Wesentlichen gleich des Ankers 5 auf. Vorzugsweise ist ein Paar von Federn 7 vorgesehen, die an den zwei einander gegenüberliegenden Seiten des Lagerabschnitts 5.2 (entlang der Schwenkachse SA gesehen) angeordnet sind. Dadurch wird eine gleichmäßige Krafteinleitung in den Anker 5 erreicht.

Wie insbesondere in Fig. 4 erkennbar, ist pro Seite ein Paar von Ausnehmungen 5.2.1 vorgesehen. Die Ausnehmungen 5.2.1 sind dabei schlitzartig ausgebildet und liegen einander diametral gegenüber, so dass die Flachfeder in das Paar von Ausnehmungen 5.2.1 einsetzbar ist. Die Ausnehmungen 5.2.1 sind dabei relativ zur Längsachse LA des Ankers 5 schräg verlaufend angeordnet, so dass auch die Längsachse der Feder 7 schräg zur Längsachse LA des Ankers 5 verläuft und in Richtung der Ebene geneigt ist, die die Vorderseite 5a des Ankers 5 aufspannt. Durch diese schräge Anordnung der Federn 7 werden diese bei der Bestromung der Spule 4 und dem damit verbundenen Verschwenken des Ankers 5 zu den Polflächen 3.1, 3.1' des Kerns 3 entgegen deren Federkraft verformt. Die durch diese Verformung entstehende Federkraft bewirkt nach der Beendigung des Stromflusses durch die Spule 4 das Zurückschwenken des Ankers 5 in dessen erste Schwenkstellung, d.h. von der Polfläche 3.1 weg.

Wie zuvor ausgeführt, wird der Ankerträger 5.1 und damit auch der Lagerabschnitt 5.2 mit den Ausnehmungen 5.2.1 in einem Spitzgussverfahren hergestellt. Vorzugsweise weist das Spitzgusswerkzeug eine Verstelleinrichtung auf, mittels der die Schrägstellung von Vorsprüngen im Spitzgusswerkzeug, mittels denen die Ausnehmungen 5.2.1 erzeugt werden, veränderbar ist. Abhängig von der Schrägstellung der Ausnehmung 5.2.1 kann trotz Verwendung der gleichen Federn 7 die Rückstellkraft des Ankers 5 verändert werden, so dass die Antriebseinheit 2 auch bei Verwendung identisch dimensionierter Federn 7 bei Fluidventilen 1, die unterschiedliche Rückstellkräfte erfordern, einsetzbar wird.

Vorzugsweise ist der Anker 5 anschlagsfrei in der Ankeraufnahme 6.1 gehalten, d.h. die Schwenkbewegung des Ankers 5 wird weder in der ersten noch in der zweiten Schwenkstellung durch ein Anliegen eines Ankerabschnitts an Komponenten, die den Anker 5 umgeben, begrenzt. Vielmehr erfolgt die Begrenzung der Schwenkbewegung des Ankers 5 durch den Ventilschließkörper 8, der abhängig von der Schwenkstellung des Ankers 5 an Anlageflächen im Ventilgehäuse 9 zur Anlage gelangt. Die Anlageflächen können insbesondere im Ventilgehäuse 9 ausgebildete Ventilsitze sein. Es sei angemerkt, dass auch in der zweiten Schwenkstellung des Ankers 5, die bei Stromfluss durch die Spule 4 eingenommen wird, der Anker 5, insbesondere die Ankerbleche 5.5, zu den Polflächen 3.1, 3.1' beabstandet ist/sind. Der Abstand beträgt vorzugsweise weniger als 1 mm, insbesondere weniger als 0,5mm, um eine möglichst hohe Krafteinleitung in den Anker 5 zu erreichen.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Fluidventil
- 2: Antriebseinheit
- 3: Kern
- 3.1, 3.1': Polfläche
- 4: Spule
- 5: Anker
- 5a: Vorderseite des Ankers
- 5b: Rückseite des Ankers
- 5.1: Ankerträger
- 5.1.1: Halteabschnitt
- 5.2: Lagerabschnitt
- 5.2.1: Ausnehmung
- 5.3: Lagerstelle
- 5.4: Anlenkstelle
- 5.5: Ankerblech
- 6: Grundkörper
- 6.1: Ankeraufnahme
- 6.1.1: Gleitlagergegenfläche
- 6.2: Ausnehmung
- 7: Feder
- 8: Ventilschließkörper
- 8.1: erster Schenkel
- 8.2: zweiter Schenkel
- 9: Ventilgehäuse

- LA: Längsachse des Ankers
- SA: Schwenkachse des Ankers

## Patentansprüche

1. Fluidventil umfassend eine magnetische Antriebseinheit (2) für einen Ventilschließkörper (8), wobei die Antriebseinheit (2) einen Kern (3), eine abschnittsweise den Kern (3) umgebende Spule (4) und einen durch die Bestromung der Spule (4) und die daraus resultierende Magnetkraft bewegbaren Anker (5) aufweist, wobei an dem Anker (5) ein Lagerabschnitt (5.2) vorgesehen ist, der eine Lagerstelle (5.3) aufweist, mittels der der Anker (5) an einem Grundkörper (6) der Antriebseinheit (2) verschwenkbar gelagert ist, wobei der Anker (5) an der dem Lagerabschnitt (5.2) gegenüberliegenden Seite eine Anlenkstelle (5.4) für den Ventilschließkörper (8) aufweist, **dadurch gekennzeichnet dass** die Anlenkstelle (5.4) an einem Vorsprung des Ankers (5) ausgebildet ist, der an einer Rückseite (5b) des Ankers (5) vorgesehen ist, wobei die Rückseite (5b) einer Vorderseite (5a) des Ankers (5) gegenüberliegt, die den Polflächen (3.1, 3.1') des Kerns (3) zugewandt ist und dass die Anlenkstelle (5.4) eine Aufnahme für ein freies Ende des Ventilschließkörpers (8) bildet, wobei das freie Ende des Ventilschließkörpers (8) verschwenkbar in der Anlenkstelle (5.4) gehalten ist.

2. Fluidventil nach Anspruch 1, **dadurch gekennzeichnet, dass** die Lagerstelle (5.3) eine Gleitlagerstelle ist, die außenseitig freiendseitig am Anker (5) vorgesehen ist und die mit einer Gleitlagergegenfläche (6.1.1) des Grundkörpers (6) zusammenwirkt.

3. Fluidventil nach Anspruch 2, **dadurch gekennzeichnet, dass** die Lagerstelle (5.3) eine im Querschnitt kreisbogenförmig ausgebildete Gleitfläche aufweist.

4. Fluidventil nach einem der vorhergehenden Ansprüche, **dadurch gekennzeichnet, dass** der Kern (3) U-förmig ausgebildet ist und ein Paar von Polflächen (3.1, 3.1 `) aufweist und dass der Anker (5) derart ausgebildet ist, dass dieser das Paar von Polflächen (3.1, 3.1') überspannt.

5. Fluidventil nach einem der vorhergehenden Ansprüche, **dadurch gekennzeichnet, dass** der Anker (5) um eine Schwenkachse (SA) verschwenkbar ist, die parallel zu einer Ebene verläuft, in der die Polflächen (3.1, 3.1') des Kerns (3) angeordnet sind.

6. Fluidventil nach einem der vorhergehenden Ansprüche, **dadurch gekennzeichnet, dass** der Anker (5) relativ zu einer Ebene, in der die Polflächen (3.1, 3.1') des Kerns (3) angeordnet sind, verschwenkbar ist, und zwar derart, dass der Anker (5) im bestromten Zustand in eine erste Schwenkstellung zu den Polflächen (3.1, 3.1') hin geschwenkt und im stromlosen Zustand in eine zweite Schwenkstellung positioniert wird, in der die Längsachse (LA) des Ankers (5) von der Ebene der Polflächen (3.1, 3.1') schräg absteht.

7. Fluidventil nach einem der vorhergehenden Ansprüche, **dadurch gekennzeichnet, dass** der Lagerabschnitt (5.2) an einander gegenüberliegenden Endbereichen jeweils eine schlitzartige Ausnehmung (5.2.1) aufweist, in die ein Abschnitt einer Feder (7) einsetzbar ist, mittels der die Rückstellung des Ankers (5) im stromlosen Zustand erfolgt.

8. Fluidventil nach Anspruch 7, **dadurch gekennzeichnet, dass** die schlitzartigen Ausnehmungen (5.3.1) schräg zu einer Längsachse (LA) des Ankers (5) verlaufen.

9. Fluidventil nach einem der vorhergehenden Ansprüche, **dadurch gekennzeichnet, dass** der Anker (5) mehrere übereinander geschichtete Ankerbleche (5.5) aufweist, die abschnittsweise durch einen Ankerträger (5.1) umgeben und relativ zueinander fixiert sind.

10. Fluidventil nach Anspruch 9, **dadurch gekennzeichnet, dass** an dem Ankerträger (5.1) die Anlenkstelle (5.4) für den Ventilschließkörper (8) und der Lagerabschnitt (5.2) ausgebildet ist.

11. Fluidventil nach Anspruch 9 oder 10, **dadurch gekennzeichnet, dass** der Ankerträger (5.1) als Spritzgussteil ausgebildet ist.

12. Fluidventil nach einem der vorhergehenden Ansprüche, **dadurch gekennzeichnet, dass** die Verschwenkbarkeit des Ankers (5) sowohl im bestromten als auch im unbestromten Zustand der magnetischen Antriebseinheit (2) durch den Schwenkbereich des Ventilschließkörpers (8) in dem Ventilgehäuse (9) begrenzt ist.

## Claims

1. A fluid valve comprising a magnetic drive unit (2) for a valve closing body (8), wherein the drive unit (2) includes a core (3), a coil (4) which partially surrounds the core (3), and an armature (5) which can be moved by the energization of the coil (4) and the resulting magnetic force, wherein a bearing portion (5. 2) is provided on the armature (5), which has a bearing area (5.3) by which the armature (5) is pivotably mounted on a main body (6) of the drive unit (2), wherein the armature (5) has, on the side opposite to the bearing portion (5.2), a linking portion (5.4) for the valve closing body (8), **characterized in that** the linking portion (5.4) is formed on a projection of the armature (5), which is provided on a rear side (5b) of the armature (5), the rear side (5b) being opposite to a front side (5a) of the armature (5), which front side faces the pole faces (3.1, 3.1') of the core (3), and **in that** the linking portion (5.4) forms a support for a free end of the valve closing body (8), the free end of the valve closing body (8) being held pivotably in the linking portion (5.4).

2. The fluid valve according to claim 1, **characterized in that** the bearing area (5.3) is a plain bearing area which is provided at a outer surface at the free-end side of the armature (5) and which interacts with a plain bearing mating surface (6.1.1) of the main body (6).

3. The fluid valve according to claim 2, **characterized in that** the bearing area (5.3) has a sliding surface of circular arc shape in cross-section.

4. The fluid valve according to any one of the preceding claims, **characterized in that** the core (3) is U-shaped and has a pair of pole faces (3.1, 3.1'), and **in that** the armature (5) is designed in such a way that it spans the pair of pole faces (3.1, 3.1').

5. The fluid valve according to any one of the preceding claims, **characterized in that** the armature (5) is pivotable about a pivot axis (SA) which is parallel to a plane in which the pole faces (3.1, 3.1') of the core (3) are arranged.

6. The fluid valve according to any one of the preceding claims, **characterized in that** the armature (5) can be pivoted relative to a plane in which the pole faces (3.1, 3.1') of the core (3) are arranged, namely in such a way that, in the energized state, the armature (5) is pivoted into a first pivot position towards the pole faces (3. 1, 3.1') and, in the de-energized state, it is positioned in a second pivot position in which the longitudinal axis (LA) of the armature (5) projects obliquely from the plane of the pole faces (3.1, 3.1').

7. The fluid valve according to any one of the preceding claims, **characterized in that** the bearing portion (5.2) has at opposite end regions in each case a slot-like recess (5.2.1) into which a portion of a spring (7) can be inserted, by means of which the return of the armature (5) is carried out in the de-energized state.

8. The fluid valve according to claim 7, **characterized in that** the slot-like recesses (5.3.1) run obliquely to a longitudinal axis (LA) of the armature (5).

9. The fluid valve according to any one of the preceding claims, **characterized in that** the armature (5) has a plurality of armature sheets (5.5) which are layered one on top of the other and which are partially surrounded by an armature carrier (5.1) and fixed relative to one another.

10. The fluid valve according to claim 9, **characterized in that** the linking portion (5.4) for the valve closing body (8) and the bearing portion (5.2) are formed on the armature carrier (5.1).

11. The fluid valve according to claim 9 or 10, **characterized in that** the armature carrier (5.1) is formed as an injection-molded part.

12. The fluid valve according to any one of the preceding claims, **characterized in that** the pivotability of the armature (5) is limited by the pivot region of the valve closing body (8) in the valve housing (9) in both the energized state and the de-energized state of the magnetic drive unit (2).

## Revendications

1. Vanne à fluide comprenant une unité d'entraînement magnétique (2) pour un corps de fermeture de vanne (8), l'unité d'entraînement (2) présentant un noyau (3), une bobine (4) entourant localement le noyau (3), et un induit (5) pouvant être déplacé par l'alimentation électrique de la bobine (4) et par la force magnétique qui en résulte, une portion d'appui (5.2) étant prévue sur l'induit (5), laquelle présente un emplacement d'appui (5.3) au moyen duquel l'induit (5) est monté de manière pivotante sur un corps de base (6) de l'unité d'entraînement (2), l'induit (5) présentant un emplacement d'articulation (5.4) pour le corps de fermeture de vanne (8) sur le côté opposé à la portion d'appui (5.2),
**caractérisée en ce que** l'emplacement d'articulation (5.4) est réalisé sur une saillie de l'induit (5) prévue sur un côté arrière (5b) de l'induit (5), le côté arrière (5b) étant opposé à un côté avant (5a) de l'induit tourné vers les surfaces polaires (3.1, 3.1') du noyau (3), et
**en ce que** l'emplacement d'articulation (5.4) forme un logement pour une extrémité libre du corps de fermeture de vanne (8), l'extrémité libre du corps de fermeture de vanne (8) étant maintenu avec faculté de pivotement dans l'emplacement d'articulation (5.4).

2. Vanne à fluide selon la revendication 1,
**caractérisée en ce que** l'emplacement d'appui (5.3) est un emplacement d'appui glissant qui est prévu, du côté extérieur, du côté de l'extrémité libre, sur l'induit (5) et qui coopère avec une contre-surface d'appui glissant (6.1.1) du corps de base (6).

3. Vanne à fluide selon la revendication 2,
**caractérisée en ce que** l'emplacement d'appui (5.3) présente une surface de glissement de section transversale en forme d'arc de cercle.

4. Vanne à fluide selon l'une des revendications précédentes,
**caractérisée en ce que** le noyau (3) est réalisé en forme de U et présente une paire de surfaces polaires (3.1, 3.1'), et
**en ce que** l'induit (5) est conçu de manière à enjamber la paire de surfaces polaires (3.1, 3.1').

5. Vanne à fluide selon l'une des revendications précédentes,
**caractérisée en ce que** l'induit (5) peut pivoter autour d'un axe de pivotement (SA) qui est parallèle à un plan dans lequel sont disposées les surfaces polaires (3.1, 3.1') du noyau (3).

6. Vanne à fluide selon l'une des revendications précédentes,
**caractérisée en ce que** l'induit (5) peut pivoter par rapport à un plan dans lequel sont disposées les surfaces polaires (3.1, 3.1') du noyau (3), et ce de telle sorte que l'induit (5), à l'état alimenté, est pivoté dans une première position de pivotement vers les surfaces polaires (3. 1, 3.1') et, à l'état non alimenté, est positionné dans une deuxième position de pivotement dans laquelle l'axe longitudinal (LA) de l'induit (5) dépasse en oblique du plan des surfaces polaires (3.1, 3.1').

7. Vanne à fluide selon l'une des revendications précédentes,
**caractérisée en ce que** la portion d'appui (5.2) présente, dans des zones d'extrémité opposées l'une à l'autre, un évidement respectif (5.2.1) en forme de fente dans lequel peut être insérée une portion d'un ressort (7) au moyen duquel s'effectue le rappel de l'induit (5) à l'état non alimenté.

8. Vanne à fluide selon la revendication 7,
**caractérisée en ce que** les évidements (5.3.1) en forme de fente s'étendent en oblique par rapport à un axe longitudinal (LA) de l'induit (5).

9. Vanne à fluide selon l'une des revendications précédentes,
**caractérisée en ce que** l'induit (5) présente plusieurs tôles d'induit (5.5) superposées qui sont entourées localement par un support d'induit (5.1) et sont fixées les unes par rapport aux autres.

10. Vanne à fluide selon la revendication 9,
**caractérisée en ce que** l'emplacement d'articulation (5.4) pour le corps de fermeture de vanne (8) et la portion d'appui (5.2) sont formés sur le support d'induit (5.1).

11. Vanne à fluide selon la revendication 9 ou 10,
**caractérisée en ce que** le support d'induit (5.1) est réalisé sous forme de pièce moulée par injection.

12. Vanne à fluide selon l'une des revendications précédentes, **caractérisée en ce que** la capacité de pivotement de l'induit (5) est limitée par la zone de pivotement du corps de fermeture de vanne (8) dans le boîtier de vanne (9), aussi bien à l'état alimenté qu'à l'état non alimenté de l'unité d'entraînement magnétique (2).
